# EUROPEAN PATENT SPECIFICATION

(11) **EP 4 130 402 B1**
(45) Date of publication and mention of the grant of the patent: **12.11.2025**
(21) Application number: 21803164.9
(22) Date of filing: 28.04.2021
(51) Int. Cl.: E02F 9/26, G06Q 50/08

(54) **REMOTE OPERATION ASSISTANCE SERVER, REMOTE OPERATION ASSISTANCE SYSTEM, AND REMOTE OPERATION ASSISTANCE METHOD**
FERNBETRIEBSUNTERSTÜTZUNGSSERVER, FERNBETRIEBSUNTERSTÜTZUNGSSYSTEM UND FERNBETRIEBSUNTERSTÜTZUNGSVERFAHREN
SERVEUR D'AIDE À L'ACTIONNEMENT À DISTANCE, SYSTÈME D'AIDE À L'ACTIONNEMENT À DISTANCE ET PROCÉDÉ D'AIDE À L'ACTIONNEMENT À DISTANCE

(30) Priority: 14.05.2020 JP 2020085080
(43) Date of publication of application: 08.02.2023
(73) Proprietor: KOBELCO CONSTRUCTION MACHINERY CO., LTD., Hiroshima-shi, Hiroshima 731-5161 (JP)
(72) Inventor: OTANI Masaki, Hiroshima-shi, Hiroshima 731-5161 (JP); SASAKI Hitoshi, Tokyo 141-8626 (JP); SAIKI Seiji, Tokyo 141-8626 (JP); YAMAZAKI Yoichiro, Tokyo 141-8626 (JP)
(74) Representative: Schön, Christoph
(86) International application number: PCT/JP2021/017095
(87) International publication number: WO 2021/230091

(56) References cited:
- WO-A1-2019/131979
- JP-A- 2007 047 948
- JP-A- 2016 075 599
- JP-A- 2016 075 599
- JP-A- 2017 211 896
- JP-A- 2019 159 727
- JP-A- 2019 159 727
- JP-A- 2019 207 570
- JP-A- 2019 207 570
- JP-A- 2020 173 150
- US-A1- 2002 165 656

## Description

### Technical field

The present invention relates to a technology to assist remote operation of a plurality of work machines by an operator through a remote operation apparatus.

### Background Art

A technology has been proposed to display on a remote server, which receives prescribed operational information from a work machine, weather conditions in conjunction with information related to raising of crops (specifically, map information including a work area of the work machine, and a standard growth management model relating to growth of crops) (see, for example, Patent Literature 1). The remote server extracts the map information including the work area of the work machine based on position information indicating the position of the work machine, extracts weather conditions corresponding to a region including the work area from weather conditions separately loaded, and displays the region in the map information and the weather conditions corresponding to the region in the map information side by side within a prescribed display area.

JP 2016 075599 A discloses a remote server which extracts map information including the work area of a work machine on the basis of position information indicating the position of the work machine, which further extracts meteorological information corresponding to a district including the work area from separately loaded meteorological information, and which makes the district of the map information and the meteorological information corresponding to the district of the map information displayed side by side together in a prescribed display area.

JP 2019 207570 A discloses an objective evaluation index of an operator's skill for remotely operating a construction machine, wherein a master comprises a mode switching unit for receiving a switching instruction for switching among an actual work mode, a simulation mode, and a test mode, and a mode execution unit for executing the mode received by the mode switching unit, wherein a server comprises work history databases for storing actual work results in the actual work mode, simulation results in the simulation mode, and test results in the test mode as work histories, a skill level calculation unit for calculating a skill level for remote operation of an operator on the basis of the work histories stored in the work history databases, and a presentation unit for presenting the skill level.

US 2002/165656 A! discloses a work management method and a work management system wherein a position of a working machine is detected, a position signal representing the detected position is transmitted, the position signal is received, management information relating to the working machine is calculated based on the received position signal, and the calculated management information is transmitted to the working machine.

JP 2019 159727 A discloses a construction management system including a construction plan data calculation unit that, based on present status topographic data at a construction site, design topographic data, basic unit data of a hydraulic shovel, and variable factor data including soil property data and weather data information, calculates construction plan data at a construction site, a target topographic data calculation unit that calculates, based on construction plan data and position information of the hydraulic shovel, target topographic data as a work target of a work machine, a target machine data calculation unit that calculates, based on the variation factor data and the target topographic data, target machine data including a target speed related to driving of a work device attached to a body of the work machine, and an output device that outputs the target machine data to the work machine.

WO 2019/131979 A1 discloses an excavator being equipped with a lower traveling body, an upper rotating body that is rotatably mounted to the lower traveling body, a cabin that is mounted to the upper rotating body, an attachment that is attached to the upper rotating body, a controller that causes a bucket to move relative to a target execution plane in response to a prescribed operation input pertaining to the attachment, and a display device that displays information pertaining to the hardness or softness of the ground surface.

### Citation List

### Patent Literature

Patent Literature 1: Japanese Patent Laid-Open No. 2016-075599

### Summary of Invention

### Technical Problem

However, there is a lack of the viewpoint of providing an operator of a work machine with information about influence of regional weather conditions, such as precipitation and temperature, on the transfer and work of the work machine.

Accordingly, an object of the present invention is to provide a server capable of providing an operator of a work machine with information about influence of various regional weather conditions, such as precipitation and temperature, on the transfer and work of the work machine.

### Solution to Problem

A remote operation assistance server of the present invention is defined in appended claim 1.

A remote operation assistance system of the present invention is defined in appended claim 8.

A remote operation assistance method of the present invention is defined in appended claim 9.

According to the above-configured remote operation assistance server or the remote operation assistance system (hereinafter referred to as the "remote operation assistance server or the like"), the first work reference information, indicating the weather conditions over the first designated period in the past at the designated area (or a designated point) where the work machine is present, is output to the output interface of the remote operation apparatus. This enables the operator of the work machine to estimate changes in inherent properties of the ground at the designated area caused by the weather conditions over the first designated period in the past, and by extension, information about the properties of the ground after the changes, which influence the transfer or work of the work machine.

### Brief Description of Drawings

FIG. 1 illustrates the configuration of a remote operation assistance system as an embodiment of the present invention.
FIG. 2 illustrates the configuration of a remote operation apparatus.
FIG. 3 illustrates the configuration of a work machine.
FIG. 4 illustrates a first function of the remote operation assistance system.
FIG. 5 illustrates a second function of the remote operation assistance system.
FIG. 6 illustrates a display mode of an environment image.
FIG. 7 illustrates first work reference information.
FIG. 8 illustrates second work reference information.
FIG. 9 illustrates the display modes of the environment image and the first work reference information.
FIG. 10 illustrates the display mode of the second work reference information.
FIG. 11 illustrates another display mode of the work reference information.

### Description of Embodiments

### (Configuration of Remote Operation Assistance System)

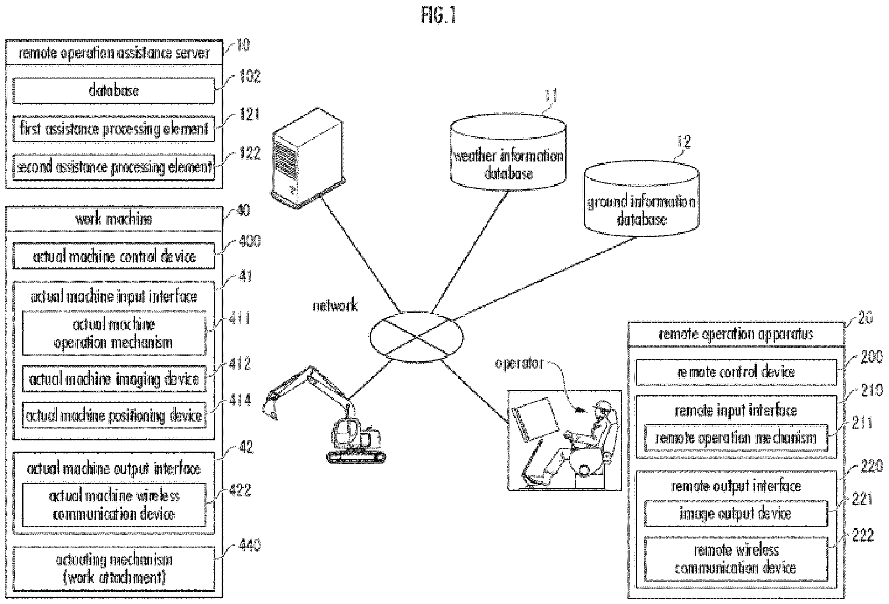

A remote operation assistance system as an embodiment of the present invention shown in FIG. 1 comprises a remote operation assistance server 10, and a remote operation apparatus 20 for remote operation of a work machine 40. The remote operation assistance server 10, the remote operation apparatus 20, and the work machine 40 are configured to allow network communication with each other. The remote operation assistance server 10, a weather information database 11, and a ground information database 12 are configured to allow network communication with each other. An intercommunication network between the remote operation assistance server 10 and the remote operation apparatus 20 may be identical to or different from an intercommunication network between the remote operation assistance server 10 and the work machine 40.

The "remote operation" is a concept indicating an operator operating the work machine 40 at a position distanced from the work machine 40 without riding on the work machine 40.

The "operator" is a concept indicating a person who operates the work machine 40 by operating the remote operation apparatus 20.

### (Configuration of Remote Operation Assistance Server)

The remote operation assistance server 10 comprises a database 102, a first assistance processing element 121, and a second assistance processing element 122. The database 102 stores and holds taken image data or the like. The database 102 may be constituted of a database server separate from the remote operation assistance server 10. Each of the assistance processing elements, which is constituted of a computation processing device (a single-core processor or a multi-core processor, or a processor core comprising these processors), reads necessary data and software from memory or other storage devices, and performs later-described computation processing on the data according to the software.

### (Configuration of Remote Operation Device)

The remote operation apparatus 20 comprises a remote control device 200, a remote input interface 210, and a remote output interface 220. The remote control device 200, which is constituted of a computation processing device (a single-core processor or a multi-core processor, or a processor core comprising these processors), reads necessary data and software from memory or other storage devices, and performs computation processing on the data according to the software. The remote input interface 210 comprises a remote operation mechanism 211. The remote output interface 220 comprises an image output device 221 and a remote wireless communication device 222.

The remote operation mechanism 211 includes a travel operation device, a turning operation device, a boom operation device, an arm operation device, and a bucket operation device. Each of the operation devices has an operation lever that receives a rotating operation. The operation lever (travel lever) of the travel operation device is operated to move a lower traveling body 410 of the work machine 40. The travel lever may also function as a travel pedal. For example, the travel pedal may be provided so as to be fixed to a base part or a lower end part of the travel lever. The operation lever (turning lever) of the turning operation device is operated to move a hydraulic turning motor, which constitutes a turning mechanism 430 of the work machine 40. The operation lever (boom lever) of the boom operation device is operated to move a boom cylinder 442 of the work machine 40. The operation lever (arm lever) of the arm operation device is operated to move an arm cylinder 444 of the work machine 40. The operation lever (bucket lever) of the bucket operation device is operated to move a bucket cylinder 446 of the work machine 40.

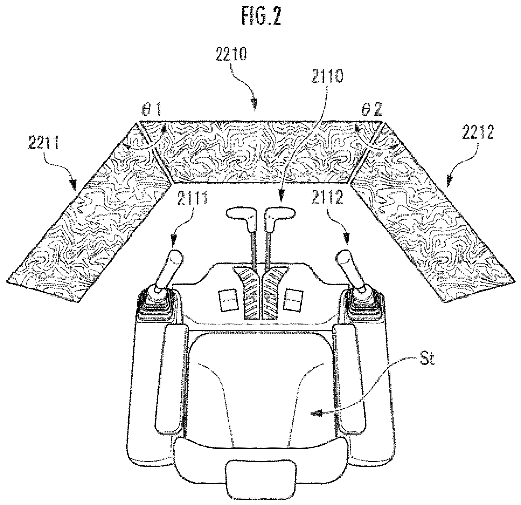

Each of the operation levers comprised in the remote operation mechanism 211 is, for example, arranged around a seat St for the operator to sit on as shown in FIG. 2. The seat St has a form of a high-back chair with armrests. However, the seat St may be a seating part in any form that enables the operator to sit on, such as the form of a low-back chair without a headrest or the form of a chair without a back.

In front of the seat St, a pair of right and left travel levers 2110, corresponding to right and left crawlers, are arranged laterally in a row. A single operation lever may function as a plurality of operation levers. For example, a left-side operation lever 2111, provided on the front side of a left-side frame of the seat St shown in FIG. 2, may function as an arm lever when operated in a front-rear direction, and may function as a turning lever when operated in a right-left direction. Similarly, a right-side operation lever 2112, provided on the front side of a right-side frame of the seat St shown in FIG. 2, may function as a boom lever when operated in the front-rear direction, and may function as a bucket lever when operated in the right-left direction. The lever pattern may optionally be changed in response to operation instructions by the operator.

The image output device 221 is constituted of a central image output device 2210 arranged in front of the seat St, a left-side image output device 2211 arranged on a diagonally left front side of the seat St, and a right-side image output device 2212 arranged on a diagonally right front side of the seat St, the image output devices each having a substantially rectangular screen as shown in FIG. 2. The screens (image display regions) of the central image output device 2210, the left-side image output device 2211, and the right-side image output device 2212 may be identical in shape and size to each other or may be different in shape and size from each other.

As shown in FIG. 2, a right edge of the left-side image output device 2211 is adjacent to a left edge of the central image output device 2210 such that the screen of the central image output device 2210 and the screen of the left-side image output device 2211 form an inclination angle θ1 (for example, 120° ≤ θ1 ≤ 150°). As shown in FIG. 2, a left edge of the right-side image output device 2212 is adjacent to a right edge of the central image output device 2210 such that the screen of the central image output device 2210 and the screen of the right-side image output device 2212 form an inclination angle θ2 (for example, 120° ≤ θ2 ≤ 150°). The inclination angles θ1 and θ2 may be identical or different.

The screens of the central image output device 2210, the left-side image output device 2211 and the right-side image output device 2212 may each be parallel to a perpendicular direction, and may be inclined to the perpendicular direction. At least one image output device, out of the central image output device 2210, the left-side image output device 2211, and the right-side image output device 2212, may be constituted of an image output device divided into a plurality of segments. For example, the central image output device 2210 may be constituted of a pair of image output devices adjacent in up-down direction, the image output devices each having a substantially rectangular screen. The image output devices 2210 to 2212 may each further comprise a speaker (audio output device).

### (Configuration of Work Machine)

The work machine 40 comprises an actual machine control device 400, an actual machine input interface 41, an actual machine output interface 42, and an actuating mechanism 440. The actual machine control device 400, which is constituted of a computation processing device (a single-core processor or a multi-core processor, or a processor core comprising these processors), reads necessary data and software from memory or other storage devices, and performs computation processing on the data according to the software.

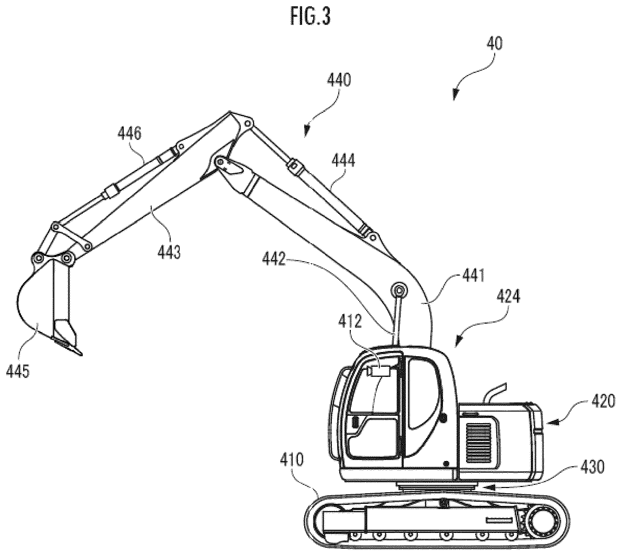

The work machine 40, for example, is a crawler shovel (construction machine). As shown in FIG. 3, the work machine 40 comprises the crawler-type lower traveling body 410 and an upper turning body 420 turnably mounted on the lower traveling body 410 through a turning mechanism 430. In a front left part of the upper turning body 420, a cab 424 (operation room) is provided. In a front center part of the upper turning body 420, the actuating mechanism 440 is provided.

The actual machine input interface 41 comprises an actual machine operation mechanism 411, an actual machine imaging device 412, and an actual machine positioning device 414. The actual machine operation mechanism 411 comprises a plurality of operation levers provided around a seat arranged inside the cab 424, as in the remote operation mechanism 211. The cab 424 is provided with a drive mechanism or a robot which receives signals corresponding to operation modes of remote operation levers and moves actual machine operation levers based on the signals. The actual machine imaging device 412 is installed, for example, inside the cab 424 to image the environment including at least part of the actuating mechanism 440 through a front window and a pair of right and left side windows. Some or all of the front window and the side windows may be omitted. The actual machine positioning device 414 is constituted of a GPS, and a gyro-sensor as necessary.

The actual machine output interface 42 comprises an actual machine wireless communication device 422.

As shown in FIG. 3, the work mechanism 440 as an actuating mechanism comprises a boom 441 fitted to the upper turning body 420 in a derrickable manner, an arm 443 rotatably coupled to the tip of the boom 441, and a bucket 445 rotatably coupled to the tip of the arm 443. The work mechanism 440 is fitted with the boom cylinder 442, the arm cylinder 444, and the bucket cylinder 446, which are each constituted of an extendable hydraulic cylinder.

The boom cylinder 442 is interposed between the boom 441 and the upper turning body 420 such that the boom cylinder 442 extends and retracts upon receiving a supply of hydraulic oil and thereby rotates the boom 441 in a derricking direction. The arm cylinder 444 is interposed between the arm 443 and the boom 441 such that the arm cylinder 444 extends and retracts upon receiving a supply of hydraulic oil and thereby rotates the arm 443 around a horizontal axis with respect to the boom 441. The bucket cylinder 446 is interposed between the bucket 445 and the arm 443 such that the bucket cylinder 446 extends and retracts upon receiving a supply of hydraulic oil and thereby rotates the bucket 445 around a horizontal axis with respect to the arm 443.

### (First Function)

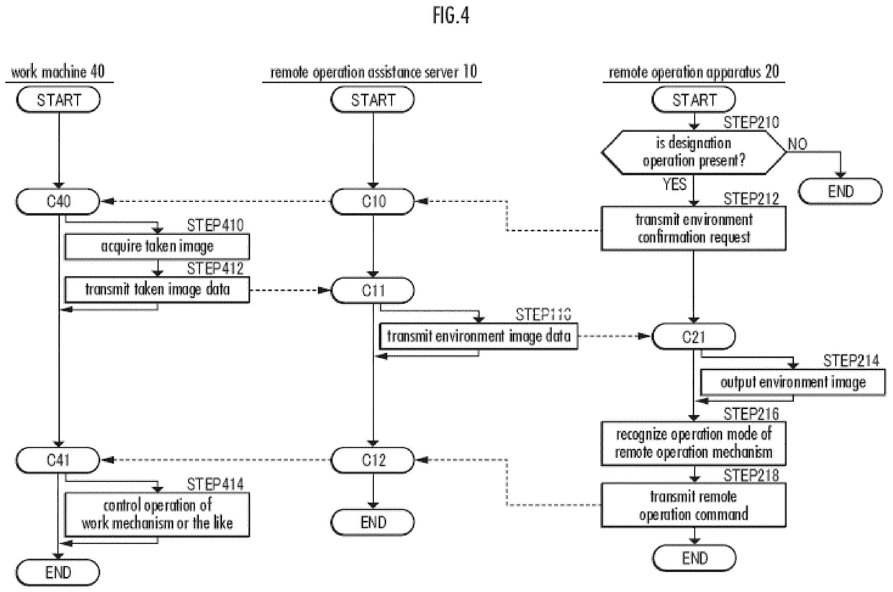

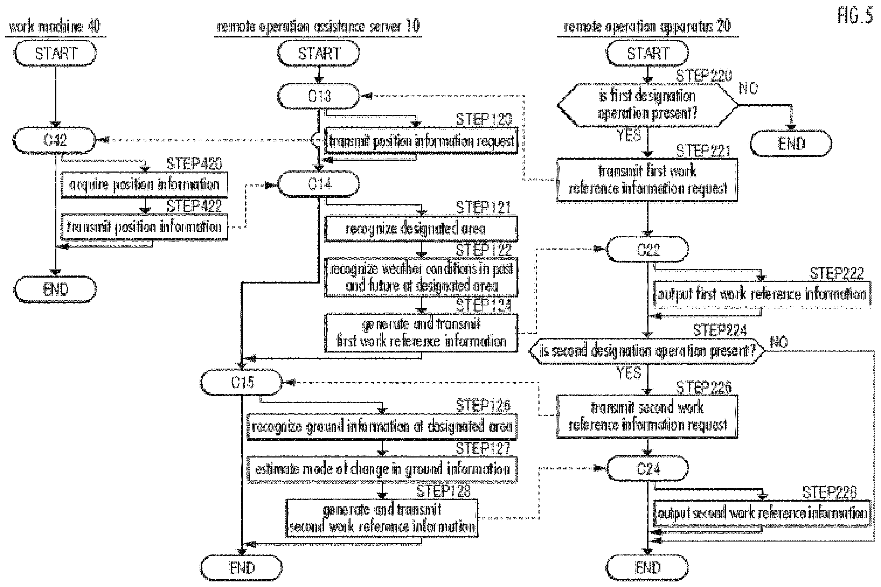

A first function of the above-configured remote operation assistance system will be described using a flowchart shown in FIG. 4. In the flowchart, blocks prefixed by "C" are used to simplify the description. These blocks signify data transmission and/or data reception, and signify condition branches where a process in a branching direction is executed, with both or one of the data transmission and the data reception as a condition. This also applies to a flowchart in FIG. 5.

The remote operation apparatus 20 determines the presence or absence of a designation operation by an operator through the remote input interface 210 (step 210 in FIG. 4). The "designation operation" is, for example, an operation such as the operator tapping in the remote input interface 210 to designate the work machine 40 as an intended machine for remote operation. When the determination result is negative (NO in step 210 in FIG. 4), the remote operation apparatus 20 ends the series of processes. On the other hand, when the determination result is positive (YES in step 210 in FIG. 4), the remote operation apparatus 20 transmits an environment confirmation request to the remote operation assistance server 10 through the remote wireless communication device 222 (step 212 in FIG. 4).

When the remote operation assistance server 10 receives the environment confirmation request, the first assistance processing element 121 transmits the environment confirmation request to the pertinent work machine 40 (C10 in FIG. 4).

When the work machine 40 receives the environment confirmation request through the actual machine wireless communication device 422 (C40 in FIG. 4), the actual machine control device 400 acquires a taken image through the actual machine imaging device 412 (step 410 in FIG. 4). The actual machine control device 400 transmits taken image data representing the taken image to the remote operation assistance server 10 through the actual machine wireless communication device 422 (step 412 in FIG. 4).

When the first assistance processing element 121 receives the taken image data in the remote operation assistance server 10 (C11 in FIG. 4), the second assistance processing element 122 transmits environment image data corresponding to the taken image to the remote operation apparatus 20 (step 110 in FIG. 4). The environment image data is the taken image data itself, and is also image data that represents a simulated environment image generated based on the taken image.

When the remote operation apparatus 20 receives the environment image data through the remote wireless communication device 222 (C21 in FIG. 4), the remote control device 200 outputs an environment image corresponding to the environment image data to the image output device 221 (step 214 in FIG. 4).

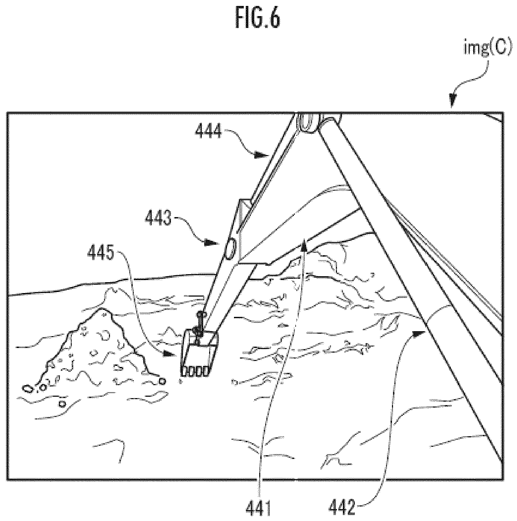

As a result, an environment image Img(C) including, for example, the boom 441, the arm 443 and the bucket 445, which are components of the work mechanism 440, is output to the image output device 221 as shown in FIG. 6.

In the remote operation apparatus 20, the remote control device 200 recognizes an operation mode of the remote operation mechanism 211 (step 216 in FIG. 4), and transmits a remote operation command corresponding to the operation mode to the remote operation assistance server 10 through the remote wireless communication device 222 (step 218 in FIG. 4).

When the second assistance processing element 122 receives the remote operation command in the remote operation assistance server 10, the first assistance processing element 121 transmits the remote operation command to the work machine 40 (C12 in FIG. 4).

When the actual machine control device 400 receives the operation command through the actual machine wireless communication device 422 in the work machine 40 (C41 in FIG. 4), the actual machine control device 400 controls operation of the work mechanism 440 or the like (step 414 in FIG. 4). For example, a work of scooping up the soil in front of the work machine 40 by the bucket 445, turning the upper turning body 420, and then dropping the soil from the bucket 445 is executed.

### (Second Function)

Another function of the above-configured remote operation assistance system will be described using the flowchart shown in FIG. 5.

The remote operation apparatus 20 determines the presence or absence of a first designation operation by the operator through the remote input interface 210 (step 220 in FIG. 5). For example, the "first designation operation" is an operation, such as tapping, in the remote input interface 210 to designate a single work machine 40 in a map indicating respective positions where the plurality of work machines 40 are present. The "first designation operation" may be determined as the operation identical to the "designation operation" or may be determined as an operation different from the "designation operation". When the determination result is negative (NO in step 220 in FIG. 5), the remote operation apparatus 20 ends the series of processes. On the other hand, when the determination result is positive (YES in step 220 in FIG. 5), the remote operation apparatus 20 transmits a first work reference information request to the remote operation assistance server 10 through the remote wireless communication device 222 (step 221 in FIG. 5). The request includes a work machine identifier used to identify the work machine 40 which has established communication with the remote operation apparatus 20 or the work machine 40 designated through the remote input interface 210.

When the remote operation assistance server 10 receives the first work reference information request (C13 in FIG. 5), the first assistance processing element 121 transmits a position information request to the work machine 40 identified by the work machine identifier included in the request (step 120 in FIG. 5).

When the work machine 40 receives the position information request through the actual machine wireless communication device 422 (C42 in FIG. 5), the actual machine control device 400 recognizes the position information (identified by latitude and longitude) of the pertinent work machine 40 through the actual machine positioning device 414 (step 420 in FIG. 5). The actual machine control device 400 transmits the position information or position data representing the position information to the remote operation assistance server 10 through the actual machine wireless communication device 422 (step 422 in FIG. 5). The actual machine control device 400 ends the processing in the work machine 40.

Regardless of the reception of the position information request (C42 in FIG. 5), the position information or the position data representing the position information may be transmitted periodically to the remote operation assistance server 10.

When the first assistance processing element 121 recognizes the position information in the remote operation assistance server 10 (C14 in FIG. 5), the first assistance processing element 121 recognizes the designated area where the pertinent work machine 40 is present (step 121 in FIG. 5). Based on the taken image data (see step 412 → C11 in FIG. 4) in addition to the position information, coordinate transformation of an imaging range may be conducted from an image coordinate system to a world coordinate system, and an area in the world coordinate system that extends based on the position according to the position information may be recognized as a designated area.

The first assistance processing element 121 refers to the weather information database 11 to recognize weather conditions over a first designated period in the past and may refer to a second designated period in the future (which may be identical in length to or different in length from the first designated period) at the designated area (step 122 in FIG. 5). The weather conditions include weather, duration of sunshine per unit time (e.g., one hour), temperature, humidity, precipitation, wind speed, wind direction, and atmospheric pressure, or one of these.

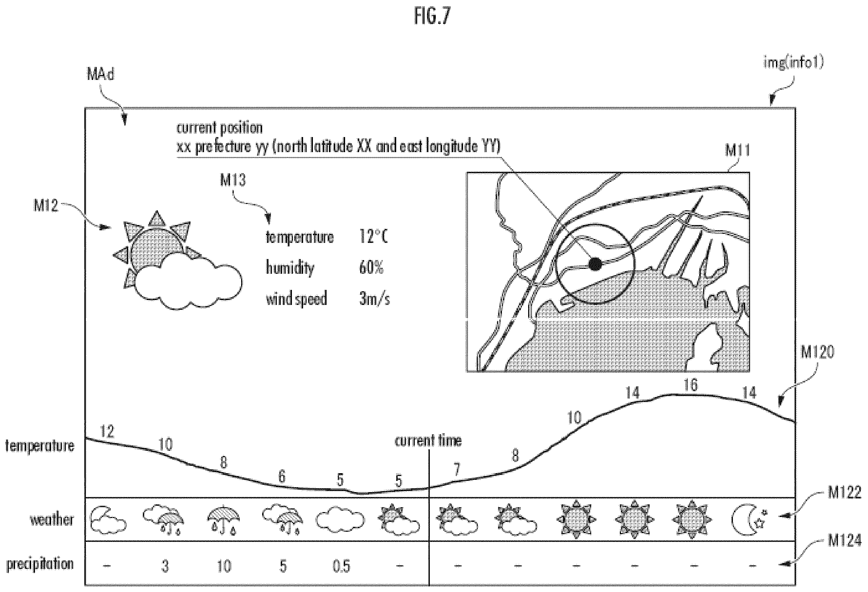

Based on the weather conditions at the designated area recognized by the first assistance processing element 121, the second assistance processing element 122 generates first work reference information and transmits the information to the remote operation apparatus 20 (step 124 in FIG. 5). For example, as shown in FIG. 7, the first work reference information includes a map M11 which encompasses at least part of a designated area A and which indicates a current position P of the work machine 40, as well as an address MAd of the current position P, an icon M12 indicating weather at current time in the designated area A, weather conditions M13 at current time in the designated area A (for example, temperature, humidity and wind speed), and diagrams M120, M122, and M124 which indicate transition of weather conditions (for example, temperature, weather, and precipitation) over the first designated period and the second designated period. The shape of the designated area A may be, for example, a circle of a given diameter extending around the current position P of the work machine 40, or a wide variety of shapes such as rectangular or polygonal shapes. A work area (registered in the database 102 in advance) where the work machine 40 carries out a work may be recognized as the designated area A.

In the remote operation apparatus 20, the remote control device 200 receives the first work reference information (C22 in FIG. 5), and outputs the first work reference information to the image output device 221 constituting the remote output interface 220 (step 222 in FIG. 5). Consequently, the first work reference information (or an image indicating the first work reference information) Img(Info1) as shown in FIG. 7 is output to the image output device 221. The first work reference information Img(Info1) includes, as described above, the map M11, and the diagrams M120, M122, and M124, or the like, which indicate transition of weather conditions (for example, temperature, weather, and precipitation) over the first designated period and the second designated period at the designated area A.

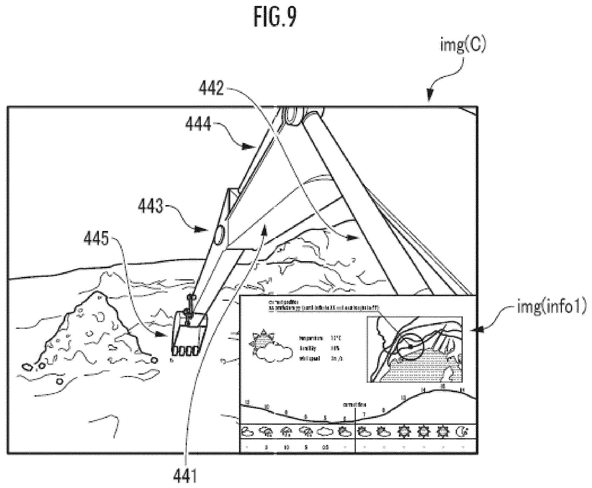

When an overlap output command is included in or belongs to the first work reference information, the remote control device 200 may output to the image output device 221 constituting the remote output interface 220 the first work reference information Img(info1) so as to be superimposed on the work environment image Img(C) as shown in FIG. 9. Outputting the first work reference information Img(info1) does not compromise the visibility of the color or the luminance of the ground in the work environment image Img(C). This enables the operator to recognize or estimate the properties of the ground in the designated area based on the color or the luminance of the ground in the designated area from the work environment image Img(C) itself, and enables the operator to determine the propriety of the estimation by comparison with the first work reference information.

The remote operation apparatus 20 determines the presence or absence of a second designation operation by the operator through the remote input interface 210 (step 224 in FIG. 5). For example, the "second designation operation" is an operation, such as tapping, in the remote input interface 210 to designate a single work machine 40 in the map indicating respective positions where the plurality of work machines 40 are present. When the determination result is negative (No in step 224 in FIG. 5), the process of determining the presence or absence of the first designation operation (step 220 in FIG. 5) and onward are repeated. On the other hand, when the determination result is positive (YES in step 224 in FIG. 5), the remote operation apparatus 20 transmits a second work reference information request to the remote operation assistance server 10 through the remote wireless communication device 222 (step 226 in FIG. 5). The request includes the work machine identifier used to identify the work machine 40 which has established communication with the remote operation apparatus 20 or the work machine 40 designated through the remote input interface 210.

When the remote operation assistance server 10 receives the second work reference information request (C15 in FIG. 5), the first assistance processing element 121 refers to the ground information database 12 based on the designated area where the work machine 40, identified by the work machine identifier included in the request, is present, and thereby recognizes intrinsic ground information at the designated area (step 126 in FIG. 5). In this case, when the designated area is not yet designated, the designated area may be designated based on the work machine identifier included in the request as described above (see step 120 → ·· → step 121 in FIG. 5). The ground information includes water content of the ground, and both or one of an N-value and a conversion N-value in consideration of geology.

The first assistance processing element 121 may refer to the ground information database 12 to recognize ground information over the first designated period in the past and the second designated period in the future (which may be identical in length to or different in length from the first designated period) at the designated area (step 127 in FIG. 5).

A storage device constituting the second assistance processing element 122 stores and holds, for example, a model as a result of learning a correlation between a mode of change over time in weather conditions and a mode of change in ground information by machine learning. When the mode of change over time in weather conditions at the designated area recognized by the first assistance processing element 121 is input into the model, an output of the model is recognized as the result of estimation or the result of prediction of the mode of change in the ground information. As the model, a tank model for computing a soil water index can be used, and further a model that reflects learning of geological properties in each designated area can be used.

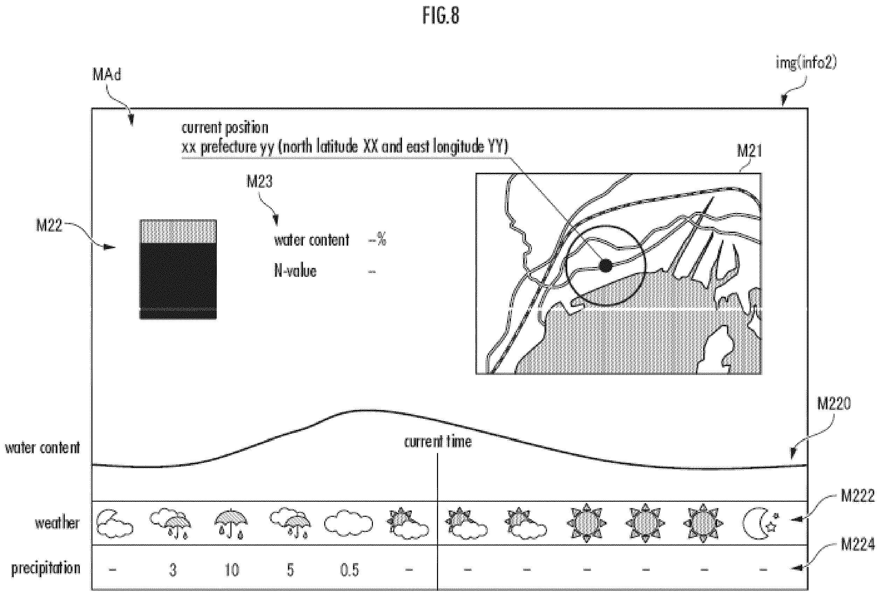

Based on the weather conditions at the designated area and the ground information recognized by the first assistance processing element 121, the second assistance processing element 122 generates second work reference information and transmits the information to the remote operation apparatus 20 (step 128 in FIG. 5). For example, as shown in FIG. 8, the second work reference information includes a map M21 which encompasses at least part of the designated area A and which indicates the current position P of the work machine 40, as well as the address MAd of the current position P, an icon M22 indicating the water content at current time in the designated area A, ground information M23 at current time in the designated area A (for example, the water content and the N-value), a diagram M220 indicating transition of the ground information (for example, the water content) over the first designated period and the second designated period, and diagrams M222 and M224 indicating transition of weather conditions.

In the remote operation apparatus 20, the remote control device 200 receives the second work reference information (C24 in FIG. 5), and outputs the second work reference information to the image output device 221 constituting the remote output interface 220 (step 228 in FIG. 5). Consequently, the second work reference information (or an image indicating the second work reference information) Img(Info2) as shown in FIG. 8 is output to the image output device 221. The second work reference information Img(Info2) includes, as described above, the map M11, and the diagram M220 or the like, which represents the transition of ground information (for example, the water content) over the first designated period and the second designated periods at the designated area A.

When an overlap output command is included in or belongs to the second work reference information, the remote control device 200 may output to the image output device 221 constituting the remote output interface 220 the second work reference information Img(info2) so as to be superimposed on the work environment image Img(C) (see FIG. 9). Outputting the second work reference information Img(info2) does not compromise the visibility of the color or the luminance of the ground in the work environment image Img(C). This enables the operator to recognize or estimate the properties of the ground in the designated area based on the color or the luminance of the ground in the designated area from the work environment image Img(C) itself, and enables the operator to determine the propriety of the estimation by comparison with the second work reference information.

### (Effects)

According to the remote operation assistance system with the above configuration, and the remote operation assistance server 10 and the remote operation apparatus 20 which constitute the remote operation assistance system, the first operation reference information Img(info1), representing weather conditions (actual measurement values or analytic values) over the first designated period in the past and weather conditions (predictive values) over the second designated period in the future at the designated area A where the work machine 40 is present, is output to the remote output interface 220 of the remote operation apparatus 20 (see step 120 → C42 → step 420 → step 422 → C14 → step 121 → step 122 → step 124 → C22 → step 222 in FIG. 5, and FIG. 7). This enables the operator of the work machine 40 to estimate or predict changes in inherent properties of the ground at the designated area caused by the weather conditions over the first designated period in the past or to be caused by the weather conditions over the second designated period in the future, and by extension, information about the properties of the ground after the changes, which influence the transfer or work of the work machine 40.

Changes occurring in the inherent properties of the ground at the designated area where the work machine 40 is present, in response to the weather conditions over the first designated period in the past and the second designated period in the future at the designated area, are also estimated or predicted, and the second work reference information Img(info2) representing the estimated result is output to the remote output interface 220 of the remote operation apparatus 20 (see step 126 → step 127 → step 128 → C24 → step 228 in FIG. 5, and FIG. 8). This enables the operator of the work machine 40 to recognize changes in inherent properties of the ground at the designated area caused by the weather conditions, such as precipitation and temperature, relating to the designated area, and furthermore changes in the inherent properties of the ground at each point to be caused by the weather conditions over the second designated period in the future. This further enables the operator to recognize the information about the properties of the ground after the changes, which influence the transfer or work of the work machine 40.

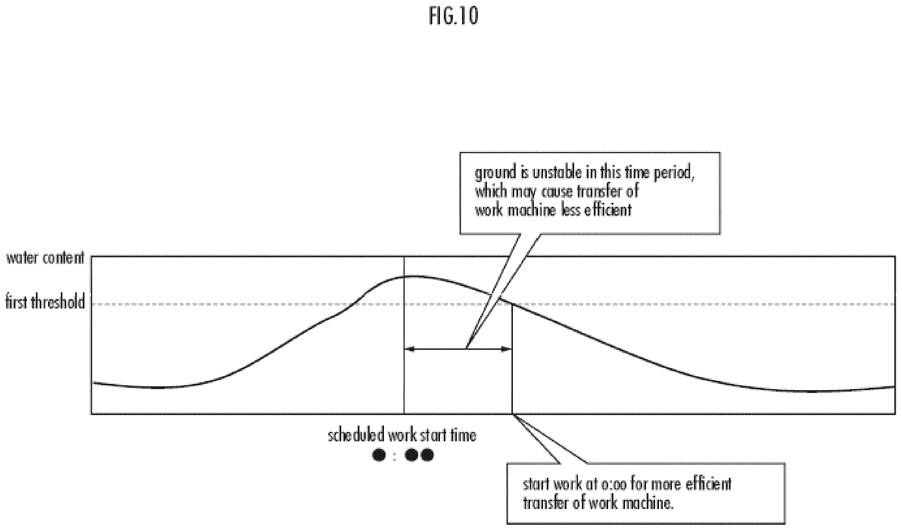

The second assistance processing element 122 generates the second work reference information indicating whether or not an index value, representing hardness or water content of the ground, as the properties of the ground at the designated area, is equal to or more than a first threshold that is set from a perspective of stable transfer of the work machine 40. For example, as shown in FIG. 10, a diagram including a curve indicating the mode of change over time in water content of the ground at the designated area (see a solid line) as well as a line segment indicating the first threshold (see a dashed line) may be generated as the second work reference information. The second work reference information may also include both or one of a notice notifying that the transfer of the work machine 40 is unstable during a time period in which the water content exceeds the first threshold after (or around) a scheduled time to start work with the work machine 40, and a notice notifying that recommended time to start work is after the end of the pertinent time period.

Similarly, the second assistance processing element 122 may generate the second work reference information indicating whether or not the index value representing the hardness or the water content of the ground, as the properties of the ground at the designated area, is equal to or less than a second threshold that is set from a perspective of easy work of the work machine 40.

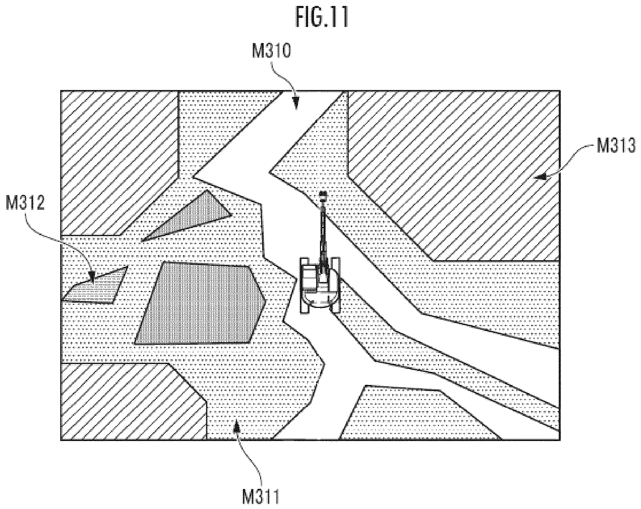

The second assistance processing element 122 may generate the second work reference information by superimposing the index value, indicating the hardness or the water content of the ground at the designated area where the work machine 40 is present, on the map information centered around the position where the work machine 40 is present. For example, as shown in FIG. 11, the map information of the map M31 indicating the current position P of the work machine 40 may include areas generated as the second work reference information. The areas include: an area M310 where the index value, representing the hardness or the water content of the ground as the properties of the ground, is equal to or more than the first threshold from the first designated period to the second designated period; an area M311 where the index value, which is equal to or more than the first threshold in the first designated period, is less than the first threshold over the second designated period; an area M312 where the index value is less than the first threshold from the first designated period to the second designated period; and an area M313 that is a forest or the like where the work machine 40 cannot be transferred. The respective areas 311 to 313 may be expressed by different colors, for example. For the map M31, the second work reference information at a given time from the first designated period to the second designated period may be generated.

The remote operation assistance server with the above configuration can provide the operator of the work machine with information about the changes in the inherent properties of the ground caused by the weather conditions, such as precipitation and temperature, relating to the work machine included in the work environment image and each point in the area including the work machine, and by extension, information about the properties of the ground after the changes, which influence transfer or work of the work machine.

In the remote operation assistance server of the present invention, it is preferable that the first assistance processing element refers to the weather information database to recognize, in addition to the weather conditions over the first designated period in the past at the designated area, predicted weather conditions over the second designated period in the future, and the second assistance processing element generates the first work reference information indicating, in addition to the weather conditions over the first designated period in the past at the designated area recognized by the first assistance processing element, the predicted weather conditions over the second designated period in the future, and causes the output interface of the remote operation apparatus to output the first work reference information based on the communication with the remote operation apparatus.

The remote operation assistance server with the above configuration outputs the first operation reference information representing weather conditions over the first designated period in the past and the second designated period in the future at the designated area where the work machine is present, to the output interface of the remote operation apparatus. This enables the operator of the work machine to estimate or predict changes in inherent properties of the ground at the designated area caused by the weather conditions over the first designated period in the past, and the changes in the inherent properties of the ground at the designated area to be caused by the weather conditions over the second designated period in the future. This further enables the operator to estimate or predict the information about the properties of the ground after the changes in the future, which influence the transfer or work of the work machine.

In the remote operation assistance server of the present invention, it is preferable that the first assistance processing element acquires a taken image including the work machine and a peripheral environment of the work machine acquired through the actual machine imaging device, and causes the output interface to output the work environment image corresponding to the taken image data based on the communication with the remote operation apparatus, and the first assistance processing element generates the first work reference information, with an area included in the work environment image output to the output interface as the designated area, and causes the output interface to output the first work reference information together with the work environment image.

The remote operation assistance server with the above configuration enables the operator of the work machine to estimate information about the changes in the inherent properties of the ground at the designated area caused by the weather conditions, such as precipitation and temperature, in the work machine included in the work environment image and in the designated area as an area including the work machine, and by extension, information about the properties of the ground after the changes, which influence transfer or work of the work machine.

In the remote operation assistance server, of the present invention, it is preferable that the second assistance processing element causes the output interface to output the first work reference information together with the work environment image, without compromising visibility of the color or the luminance of the ground in the work environment image.

The remote operation assistance server with the above configuration enables the operator to recognize or estimate the properties of the ground in the designated area based on the color or the luminance of the ground in the designated area from the work environment image itself, and enables the operator to determine the propriety of the estimation by comparison with the first work reference information.

In the remote operation assistance server of the present invention, it is preferable that the first assistance processing element refers to the ground information database to recognize the inherent properties of the ground at the designated area, and the second assistance processing element estimates changes occurring in the inherent properties of the ground at the designated area recognized by the first assistance processing element, in response to the weather conditions at the designated area recognized by the first assistance processing element, generates the second work reference information indicating the properties of the ground at the designated area after the changes, and causes the output interface of the remote operation apparatus to output the second work reference information based on the communication with the remote operation apparatus.

The remote operation assistance server with the above configuration estimates or predicts changes occurring in the inherent properties of the ground at the designated area where the work machine is present, in response to the weather conditions over the first designated period in the past (and the second designated period in the future) at the designated area, and outputs the second work reference information representing the estimated result to the output interface of the remote operation apparatus. This enables the operator of the work machine to recognize changes in inherent properties of the ground at the designated area caused by the weather conditions, such as precipitation and temperature, relating to the designated area, (and furthermore the changes in the inherent properties of the ground at each point to be caused by the weather conditions over the second designated period in the future). This further enables the operator to recognize the information about the properties of the ground after the changes, which influence the transfer or work of the work machine.

In the remote operation assistance server , of the present invention, it is preferable that the second assistance processing element generates the second work reference information indicating whether or not the index value representing hardness or water content of the ground, as the properties of the ground at the designated area, is equal to or more than the first threshold that is set from a perspective of stable transfer of the work machine.

The remote operation assistance server with the above configuration enables the operator of the work machine to recognize whether or not the hardness of the ground corresponding to the weather conditions, such as precipitation and temperature in the designated area, is sufficient from the perspective of the stable transfer of the work machine.

In the remote operation assistance server of the present invention, it is preferable that the second assistance processing element generates the second work reference information indicating whether or not the index value representing hardness or water content of the ground, as the properties of the ground at the designated area, is equal to or less than the second threshold that is set from the perspective of easy work of the work machine.

The remote operation assistance server with the above configuration enables the operator of the work machine to recognize whether or not the softness of the ground corresponding to the weather conditions, such as precipitation and temperature in the designated area, is sufficient from the perspective of easy work of the work machine.

In the remote operation assistance server of the present invention, it is preferable that the first assistance processing element acquires a taken image including the work machine and a peripheral environment of the work machine acquired through the actual machine imaging device, and causes the output interface to output the work environment image corresponding to the taken image data based on the communication with the remote operation apparatus, and the first assistance processing element generates the second work reference information, with an area included in the work environment image output to the output interface as the designated area, and causes the output interface to output the second work reference information together with the work environment image.

The remote operation assistance server with the above configuration enables the operator of the work machine to recognize information about the changes in the inherent properties of the ground at the designated area caused by the weather conditions, such as precipitation and temperature, in the work machine included in the work environment image and in the designated area as an area including the work machine, and by extension information about the properties of the ground after the changes, which influence transfer or work of the work machine.

In the remote operation assistance server of the present invention, it is preferable that the second assistance processing element causes the output interface to output the second work reference information together with the work environment image, without compromising visibility of the color or the luminance of the ground in the work environment image.

The remote operation assistance server with the above configuration enables the operator to recognize or estimate the properties of the ground in the designated area based on the color or the luminance of the ground in the designated area from the work environment image itself, and enables the operator to determine the propriety of the estimation by comparison with the second work reference information.

### Reference Signs List

10 ... REMOTE OPERATION ASSISTANCE SERVER, 11 ... WEATHER INFORMATION DATABASE, 12 ... GROUND INFORMATION DATABASE, 20...REMOTE OPERATION DEVICE, 40 ... WORK MACHINE, 102 ... DATABASE, 121...FIRST ASSISTANCE PROCESSING ELEMENT, 122...SECOND ASSISTANCE PROCESSING ELEMENT, 200... REMOTE CONTROL DEVICE, 210...REMOTE INPUT INTERFACE, 211...REMOTE OPERATION MECHANISM, 220 ... REMOTE OUTPUT INTERFACE, 221 ...IMAGE OUTPUT DEVICE, 400 ... ACTUAL MACHINE CONTROL DEVICE, 41 ... ACTUAL MACHINE INPUT INTERFACE, 412 ... ACTUAL MACHINE IMAGING DEVICE, 42 ... ACTUAL MACHINE OUTPUT INTERFACE, 424 ... CAB (OPERATION ROOM), 440 ... WORK MECHANISM (ACTUATING MECHANISM), 445 ... BUCKET (WORK PART).

## Claims

1. A remote operation assistance server (10) configured to assist remote operation of a work machine (40) by an operator through a remote operation apparatus (20), the server (10) comprising:
a first assistance processing element (121) configured to refer to a weather information database to recognize weather conditions over a first designated period in a past at a designated area where the work machine (40) is present; and
a second assistance processing element (122) configured to
generate a first work reference information indicating the weather conditions over the first designated period in the past at the designated area recognized by the first assistance processing element (121) and
cause an output interface (220) of the remote operation apparatus (20) to output the first work reference information based on communication with the remote operation apparatus (20),
**characterized in that** the first assistance processing element (121) is further configured to refer to a ground information database to recognize inherent properties of a ground at the designated area;
**in that** the second assistance processing element (122) is further configured to estimate changes occurring in the inherent properties of the ground at the designated area recognized by the first assistance processing element (121), in response to the weather conditions at the designated area recognized by the first assistance processing element (121), to generate a second work reference information indicating the properties of the ground at the designated area after the changes, and to cause the output interface (220) of the remote operation apparatus (20) to output the second work reference information based on the communication with the remote operation apparatus (20),
and **in that** the second assistance processing element (122) is further configured to generate the second work reference information indicating whether or not an index value representing hardness or water content of the ground, as the properties of the ground at the designated area, is equal to or more than a first threshold that is set from a perspective of stable transfer of the work machine (40).

2. The remote operation assistance server (10) according to claim 1, wherein:
The first assistance processing element (121) refers to the weather information database to recognize, in addition to the weather conditions over the first designated period in the past at the designated area, predicted weather conditions over a second designated period in a future; and
the second assistance processing element (122) generates the first work reference information indicating, in addition to the weather conditions over the first designated period in the past at the designated area recognized by the first assistance processing element (121), the predicted weather conditions over the second designated period in the future, and causes the output interface (220) of the remote operation apparatus (20) to output the first work reference information based on the communication with the remote operation apparatus (20).

3. The remote operation assistance server (10) according to claim 1 or 2, wherein:
the first assistance processing element (121) acquires a taken image of the work machine (40) and a peripheral environment of the work machine (40) acquired through an actual machine imaging device (412), and causes the output interface (220) to output a work environment image corresponding to data on the taken image based on the communication with the remote operation apparatus (20); and
the first assistance processing element (121) generates the first work reference information, with an area included in the work environment image output to the output interface (220) as the designated area, and causes the output interface (220) to output the first work reference information together with the work environment image.

4. The remote operation assistance server (10) according to claim 3, wherein the output interface (220) is caused to output the first work reference information together with the work environment image, without compromising visibility of color or luminance of a ground in the work environment image.

5. The remote operation assistance server (10) according to claim 1, wherein
the second assistance processing element (122) generates the second work reference information indicating whether or not an index value representing hardness or water content of the ground, as the properties of the ground at the designated area, is equal to or less than a second threshold that is set from a perspective of easy work of the work machine (40).

6. The remote operation assistance server (10) according to claim 1 or 5, wherein:
the first assistance processing element (121) acquires a taken image of the work machine (40) and a peripheral environment of the work machine (40) acquired through an actual machine imaging device (412), and causes the output interface (220) to output a work environment image corresponding to data on the taken image based on the communication with the remote operation apparatus (20); and
the first assistance processing element (121) generates the second work reference information, with an area included in the work environment image output to the output interface (220) as the designated area, and causes the output interface (220) to output the second work reference information together with the work environment image.

7. The remote operation assistance server (10) according to claim 6, wherein
the output interface (220) is caused to output the second work reference information together with the work environment image, without compromising visibility of color or luminance of a ground in the work environment image.

8. A remote operation assistance system, comprising:
the remote operation assistance server (10) according to any one of claims 1 to 7; and
the remote operation apparatus (20).

9. A remote operation assistance method for assisting remote operation of a work machine (40) by an operator through a remote operation apparatus (20), the method comprising:
a first assistance processing step of referring to a weather information database to recognize weather conditions over a first designated period in a past at a designated area where the work machine (40) is present and of referring to a ground information database to recognize inherent properties of a ground at the designated area; and
a second assistance processing step of generating first work reference information indicating the weather conditions over the first designated period in the past at the designated area recognized in the first assistance processing step and causing an output interface (220) of the remote operation apparatus (20) to output the first work reference information based on communication with the remote operation apparatus (20), of estimating changes occurring in the inherent properties of the ground at the designated area recognized in the first assistance processing step, in response to the weather conditions at the designated area recognized in the first assistance processing step, of generating a second work reference information indicating the properties of the ground at the designated area after the changes, of causing the output interface (220) of the remote operation apparatus (20) to output the second work reference information based on the communication with the remote operation apparatus (20), and of generating the second work reference information indicating whether or not an index value representing hardness or water content of the ground, as the properties of the ground at the designated area, is equal to or more than a first threshold that is set from a perspective of stable transfer of the work machine (40).

## Patentansprüche

1. Fernbedienungsunterstützungsserver (10), der konfiguriert ist, den Fernbetrieb einer Arbeitsmaschine (40) durch einen Bediener über eine Fernbedienungsvorrichtung (20) zu unterstützen, wobei der Server (10) Folgendes umfasst:
ein erstes Unterstützungsverarbeitungselement (121), das konfiguriert ist, auf eine Wetterinformationsdatenbank zuzugreifen, um Wetterbedingungen über einen ersten festgelegten Zeitraum in der Vergangenheit in einem festgelegten Gebiet, in dem sich die Arbeitsmaschine (40) befindet, zu erkennen; und
ein zweites Unterstützungsverarbeitungselement (122), das konfiguriert ist:
eine erste Arbeitsreferenzinformation zu erzeugen, die die Wetterbedingungen über den ersten festgelegten Zeitraum in der Vergangenheit im festgelegten Gebiet, die durch das erste Unterstützungsverarbeitungselement (121) erkannt werden, angibt, und eine Ausgabeschnittstelle (220) der Fernbedienungsvorrichtung (20) zu veranlassen, die erste Arbeitsreferenzinformation auf Grundlage einer Kommunikation mit der Fernbedienungsvorrichtung (20) auszugeben,
**dadurch gekennzeichnet,**
**dass** das erste Unterstützungsverarbeitungselement (121) ferner konfiguriert ist, auf eine Bodeninformationsdatenbank zuzugreifen, um die inhärenten Eigenschaften eines Bodens im festgelegten Gebiet zu erkennen;
**dass** das zweite Unterstützungsverarbeitungselement (122) ferner konfiguriert ist, Änderungen zu schätzen, die in den inhärenten Eigenschaften des Bodens im festgelegten Gebiet, die durch das erste Unterstützungsverarbeitungselement (121) erkannt werden, in Reaktion auf die Wetterbedingungen im festgelegten Gebiet, die durch das erste Unterstützungsverarbeitungselement (121) erkannt werden, auftreten, um eine zweite Arbeitsreferenzinformation zu erzeugen, die die Eigenschaften des Bodens im festgelegten Gebiet nach den Änderungen angibt, und um die Ausgabeschnittstelle (220) der Fernbedienungsvorrichtung (20) zu veranlassen, die zweite Arbeitsreferenzinformation auf Grundlage einer Kommunikation mit der Fernbedienungsvorrichtung (20) auszugeben,
und **dass** das zweite Unterstützungsverarbeitungselement (122) ferner konfiguriert ist, die zweite Arbeitsreferenzinformation zu erzeugen, die angibt, ob oder ob nicht ein Indexwert, der die Härte oder den Wassergehalt des Bodens als die Eigenschaften des Bodens im festgelegten Gebiet darstellt, gleich oder größer als ein erster Schwellenwert ist, der aus der Perspektive eines stabilen Transfers der Arbeitsmaschine (40) festgelegt ist.

2. Fernbedienungsunterstützungsserver (10) gemäß Anspruch 1, wobei:
das erste Unterstützungsverarbeitungselement (121) auf die Wetterinformationsdatenbank zugreift, um zusätzlich zu den Wetterbedingungen über den ersten festgelegten Zeitraum in der Vergangenheit im festgelegten Gebiet auch vorhergesagte Wetterbedingungen über einen zweiten festgelegten Zeitraum in der Zukunft zu erkennen; und
das zweite Unterstützungsverarbeitungselement (122) die erste Arbeitsreferenzinformation erzeugt, die zusätzlich zu den Wetterbedingungen über den ersten festgelegten Zeitraum in der Vergangenheit im festgelegten Gebiet, die durch das erste Unterstützungsverarbeitungselement (121) erkannt wurden, auch die vorhergesagten Wetterbedingungen über den zweiten festgelegten Zeitraum in der Zukunft angibt, und die Ausgabeschnittstelle (220) der Fernbedienungsvorrichtung (20) veranlasst, die erste Arbeitsreferenzinformation auf Grundlage einer Kommunikation mit der Fernbedienungsvorrichtung (20) auszugeben.

3. Fernbedienungsunterstützungsserver (10) gemäß Anspruch 1 oder Anspruch 2, wobei:
das erste Unterstützungsverarbeitungselement (121) ein aufgenommenes Bild der Arbeitsmaschine (40) und der peripheren Umgebung der Arbeitsmaschine (40), das mittels einer Bildaufnahmevorrichtung einer tatsächlichen Maschine (412) aufgenommen wurde, erfasst und die Ausgabeschnittstelle (220) veranlasst, ein Arbeitsumgebungsbild, das den Daten auf dem aufgenommenen Bild entspricht, auf Grundlage einer Kommunikation mit der Fernbedienungsvorrichtung (20) auszugeben; und
das erste Unterstützungsverarbeitungselement (121) die erste Arbeitsreferenzinformation erzeugt, wobei ein im Arbeitsumgebungsbild enthaltenes Gebiet an die Ausgabeschnittstelle (220) als das festgelegte Gebiet ausgegeben wird, und die Ausgabeschnittstelle (220) veranlasst, die erste Arbeitsreferenzinformation zusammen mit dem Arbeitsumgebungsbild auszugeben.

4. Fernbedienungsunterstützungsserver (10) gemäß Anspruch 3, wobei die Ausgabeschnittstelle (220) veranlasst wird, die erste Arbeitsreferenzinformation zusammen mit dem Arbeitsumgebungsbild auszugeben, ohne die Sichtbarkeit von Farbe oder Helligkeit eines Bodens im Arbeitsumgebungsbild zu beeinträchtigen.

5. Fernbedienungsunterstützungsserver (10) gemäß Anspruch 1, wobei das zweite Unterstützungsverarbeitungselement (122) die zweite Arbeitsreferenzinformation erzeugt, die angibt, ob oder ob nicht ein Indexwert, der die Härte oder den Wassergehalt des Bodens als die Eigenschaften des Bodens im festgelegten Gebiet darstellt, gleich oder kleiner als ein zweiter Schwellenwert ist, der aus der Perspektive einer einfachen Bearbeitung durch die Arbeitsmaschine (40) festgelegt ist.

6. Fernbedienungsunterstützungsserver (10) gemäß Anspruch 1 oder 5, wobei:
das erste Unterstützungsverarbeitungselement (121) ein aufgenommenes Bild der Arbeitsmaschine (40) und der peripheren Umgebung der Arbeitsmaschine (40), das mittels einer Bildaufnahmevorrichtung einer tatsächlichen Maschine (412) aufgenommen wurde, erfasst und die Ausgabeschnittstelle (220) veranlasst, ein Arbeitsumgebungsbild, das den Daten auf dem aufgenommenen Bild entspricht, auf Grundlage einer Kommunikation mit der Fernbedienungsvorrichtung (20) auszugeben; und
das erste Unterstützungsverarbeitungselement (121) die zweite Arbeitsreferenzinformation erzeugt, wobei ein im Arbeitsumgebungsbild enthaltenes Gebiet an die Ausgabeschnittstelle (220) als das festgelegte Gebiet ausgegeben wird, und die Ausgabeschnittstelle (220) veranlasst, die zweite Arbeitsreferenzinformation zusammen mit dem Arbeitsumgebungsbild auszugeben.

7. Fernbedienungsunterstützungsserver (10) gemäß Anspruch 6, wobei die Ausgabeschnittstelle (220) veranlasst wird, die zweite Arbeitsreferenzinformation zusammen mit dem Arbeitsumgebungsbild auszugeben, ohne die Sichtbarkeit von Farbe oder Helligkeit eines Bodens im Arbeitsumgebungsbild zu beeinträchtigen.

8. Fernbedienungsunterstützungssystem, umfassend:
den Fernbedienungsunterstützungsserver (10) gemäß einem der Ansprüche 1 bis 7; und
die Fernbedienungsvorrichtung (20).

9. Fernbedienungsunterstützungsverfahren zur Unterstützung des Fernbetriebs einer Arbeitsmaschine (40) durch einen Bediener über eine Fernbedienungsvorrichtung (20), wobei das Verfahren umfasst:
einen ersten Unterstützungsverarbeitungsschritt des Zugreifens auf eine Wetterinformationsdatenbank, um Wetterbedingungen über einen ersten festgelegten Zeitraum in der Vergangenheit in einem festgelegten Gebiet, in dem sich die Arbeitsmaschine (40) befindet, zu erkennen, und des Zugreifens auf eine Bodeninformationsdatenbank, um die inhärenten Eigenschaften eines Bodens im festgelegten Gebiet zu erkennen; und
einen zweiten Unterstützungsverarbeitungsschritt des Erzeugens einer ersten Arbeitsreferenzinformation, die die Wetterbedingungen über den ersten festgelegten Zeitraum in der Vergangenheit im festgelegten Gebiet, die im ersten Unterstützungsverarbeitungsschritt erkannt wurden, angibt, und des Veranlassens der Ausgabeschnittstelle (220) der Fernbedienungsvorrichtung (20), die erste Arbeitsreferenzinformation auf Grundlage einer Kommunikation mit der Fernbedienungsvorrichtung (20) auszugeben, des Abschätzens von Änderungen, die in den inhärenten Eigenschaften des Bodens im festgelegten Gebiet, die im ersten Unterstützungsschritt erkannt wurden, in Reaktion auf die Wetterbedingungen im festgelegten Gebiet, die im ersten Unterstützungsschritt erkannt wurden, auftreten, des Erzeugens einer zweiten Arbeitshinweisinformation, die die Eigenschaften des Bodens im festgelegten Gebiet nach den Änderungen angibt, des Veranlassens der Ausgabeschnittstelle (220) der Fernbedienungsvorrichtung (20), die zweite Arbeitshinweisinformation auf Grundlage einer Kommunikation mit der Fernbedienungsvorrichtung (20) auszugeben, und des Erzeugens der zweiten Arbeitshinweisinformation, die angibt, ob oder ob nicht ein Indexwert, der die Härte oder den Wassergehalt des Bodens als die Eigenschaften des Bodens im festgelegten Gebiet darstellt, gleich oder größer als ein erster Schwellenwert ist, der aus der Perspektive eines stabilen Transfers der Arbeitsmaschine (40) festgelegt ist.

## Revendications

1. Serveur d'assistance à l' opération à distance (10) configuré pour assister l' opération à distance d'une machine de travail (40) par un opérateur par le biais d'un appareil de commande à distance (20), le serveur (10) comprenant :
une premier élément de traitement d' assistance (121) configuré pour se référer à une base de données d'informations météorologiques afin de reconnaître des conditions météorologiques sur une première période désignée dans le passé au niveau d'une zone désignée où se trouve la machine de travail (40) ; et
un deuxième élément de traitement d' assistance (122) configuré pour
générer une première information de référence de travail indiquant les conditions météorologiques sur la première période désignée dans le passé au niveau de la zone désignée reconnue par le premier élément de traitement d' assistance (121) et
amener une interface de sortie (220) de l'appareil de commande à distance (20) à fournir la première information de référence de travail sur la base d'une communication avec l'appareil de commande à distance (20),
**caractérisé en ce que** le premier élément de traitement d' assistance (121) est en outre configuré pour se référer à une base de données d'informations sur le sol pour reconnaître des propriétés inhérentes d'un sol au niveau de la zone désignée ;
**en ce que** le deuxième élément de traitement d' assistance (122) est en outre configuré pour estimer des changements intervenant dans les propriétés inhérentes du sol au niveau de la zone désignée reconnue par le premier élément de traitement d' assistance (121), en réponse aux conditions météorologiques au niveau de la zone désignée reconnue par le premier élément de traitement d' assistance (121), pour générer une deuxième information de référence de travail indiquant les propriétés du sol au niveau de la zone désignée après les changements, et pour amener l'interface de sortie (220) de l'appareil de commande à distance (20) à fournir la deuxième information de référence de travail sur la base de la communication avec l'appareil de commande à distance (20),
et **en ce que** le deuxième élément de traitement d' assistance (122) est en outre configuré pour générer la deuxième information de référence de travail indiquant si oui ou non une valeur d'indice représentant la dureté ou la teneur en eau du sol, comme propriétés du sol au niveau de la zone désignée, est égale ou supérieure à un premier seuil fixé à partir d'une perspective de transfert stable de la machine de travail (40).

2. Serveur d'assistance à l' opération à distance (10) selon la revendication 1, dans lequel :
le premier élément de traitement d' assistance (121) se réfère à la base de données d'informations météorologiques pour reconnaître, en plus des conditions météorologiques sur la première période désignée dans le passé au niveau de la zone désignée, des conditions météorologiques prévues sur une deuxième période désignée dans le futur ; et
le deuxième élément de traitement d' assistance (122) génère la première information de référence de travail indiquant, en plus des conditions météorologiques sur la première période désignée dans le passé au niveau de la zone désignée reconnue par le premier élément de traitement d' assistance (121), les conditions météorologiques prévues sur la deuxième période désignée dans le futur, et amène l'interface de sortie (220) de l'appareil de commande à distance (20) à fournir la première information de référence de travail sur la base de la communication avec l'appareil de commande à distance (20).

3. Serveur d'assistance à l' opération à distance (10) selon la revendication 1 ou 2, dans lequel :
le premier élément de traitement d' assistance (121) acquiert une image capturée de la machine de travail (40) et d'un environnement périphérique de la machine de travail (40) acquise par le biais d'un dispositif d'imagerie de machine réelle (412), et amène l'interface de sortie (220) à fournir une image d'environnement de travail correspondant à des données sur l'image capturée sur la base de la communication avec l'appareil de commande à distance (20) ; et
le premier élément de traitement d' assistance (121) génère la première information de référence de travail, avec une zone incluse dans l'image d'environnement de travail fournie à l'interface de sortie (220) comme la zone désignée, et amène l'interface de sortie (220) à fournir la première information de référence de travail ensemble avec l'image d'environnement de travail.

4. Serveur d'assistance à l' opération à distance (10) selon la revendication 3, dans lequel l'interface de sortie (220) est amenée à fournir la première information de référence de travail ensemble avec l'image d'environnement de travail, sans compromettre la visibilité de la couleur ou de la luminance d'un sol dans l'image d'environnement de travail.

5. Serveur d'assistance à l' opération à distance (10) selon la revendication 1, dans lequel
le deuxième élément de traitement d' assistance (122) génère la deuxième information de référence de travail indiquant si oui ou non une valeur d'indice représentant la dureté ou la teneur en eau du sol, comme propriétés du sol au niveau de la zone désignée, est égale ou inférieure à un deuxième seuil défini à partir d'une perspective de travail facile de la machine de travail (40).

6. Serveur d'assistance à l' opération à distance (10) selon la revendication 1 ou 5, dans lequel :
le premier élément de traitement d' assistance (121) acquiert une image capturée de la machine de travail (40) et d'un environnement périphérique de la machine de travail (40) acquise par le biais d'un dispositif d'imagerie de machine réelle (412), et amène l'interface de sortie (220) à fournir une image d'environnement de travail correspondant à des données sur l'image capturée sur la base de la communication avec l'appareil de commande à distance (20) ; et
le premier élément de traitement d' assistance (121) génère la deuxième information de référence de travail, avec une zone incluse dans l'image d'environnement de travail fournie à l'interface de sortie (220) comme zone désignée, et amène l'interface de sortie (220) à fournir la deuxième information de référence de travail ensemble avec l'image d'environnement de travail.

7. Serveur d'assistance à l' opération à distance (10) selon la revendication 6, dans lequel
l'interface de sortie (220) est amenée à fournir la deuxième information de référence de travail ensemble avec l'image d'environnement de travail, sans compromettre la visibilité de la couleur ou de la luminance d'un sol dans l'image d'environnement de travail.

8. Système d'assistance à l' opération à distance, comprenant :
le serveur d'assistance à l' opération à distance (10) selon l'une quelconque des revendications 1 à 7 ; et
l'appareil de commande à distance (20).

9. Procédé d'assistance à l' opération à distance pour assister l' opération à distance d'une machine de travail (40) par un opérateur par le biais d'un appareil de commande à distance (20), le procédé comprenant :
une première étape de traitement d' assistance consistant à faire référence à une base de données d'informations météorologiques pour reconnaître des conditions météorologiques sur une première période désignée dans le passé au niveau d'une zone désignée où se trouve la machine de travail (40) et à faire référence à une base de données d'informations sur le sol pour reconnaître des propriétés inhérentes d'un sol au niveau de la zone désignée ; et
une deuxième étape de traitement d' assistance consistant à générer une première information de référence de travail indiquant les conditions météorologiques sur la première période désignée dans le passé au niveau de la zone désignée reconnue dans la première étape de traitement d' assistance et à amener une interface de sortie (220) de l'appareil de commande à distance (20) à fournir la première information de référence de travail sur la base d'une communication avec l'appareil de commande à distance (20), à estimer des changements intervenant dans les propriétés inhérentes du sol au niveau de la zone désignée reconnue dans la première étape de traitement d' assistance, en réponse aux conditions météorologiques au niveau de la zone désignée reconnue par la première étape de traitement d' assistance, à générer une deuxième information de référence de travail indiquant les propriétés du sol au niveau de la zone désignée après les changements, à amener l'interface de sortie (220) de l'appareil de commande à distance (20) à fournir la deuxième information de référence de travail sur la base de la communication avec l'appareil de commande à distance (20), et à générer la deuxième information de référence de travail indiquant si oui ou non une valeur d'indice représentant la dureté ou la teneur en eau du sol, comme propriétés du sol au niveau de la zone désignée, est égale ou supérieure à un premier seuil défini à partir d'une perspective de transfert stable de la machine de travail (40).
